(19) Europäisches Patentamt
European Patent Office
Office européen des brevets

(11) **EP 3 910 500 A1**

(12) **EUROPEAN PATENT APPLICATION**

(43) Date of publication:
**17.11.2021 Bulletin 2021/46**

(51) Int Cl.:
**G06F 16/951** (2019.01)    **G06Q 50/00** (2012.01)

(21) Application number: **21173983.4**

(22) Date of filing: **14.05.2021**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(30) Priority: **15.05.2020 GB 202007173** | (71) Applicant: **Rare Recruitment Ltd**<br>**London N4 2BT (GB)**<br><br>(72) Inventor: **MOKADES, Raphael**<br>**London, N4 2BT (GB)**<br><br>(74) Representative: **Schulte, Drew Joseph**<br>**Pillsbury Winthrop Shaw Pittmann LLP**<br>**Tower 42, Level 21**<br>**25 Old Broad Street**<br>**London EC2N 1HQ (GB)** |

(54) **METHODS AND SYSTEMS FOR INTEGRATING INSTITUTIONAL DATA SYSTEMS AND APPLICATION MANAGEMENT SYSTEMS**

(57)    Methods and systems are also described for an integrated application management system that may generate for display on a local display device, in a human-readable format, a first user interface comprising native performance data from an institutional data system with a user performance index that provides a qualitative indication of the native performance data, with respect to native performance data for other users, based on the user performance index.

_100_

**FIG. 1**

**Description**

**FIELD OF THE INVENTION**

The invention relates to integrating native performance data from an institutional data system with user information from an application management system.

**BACKGROUND**

Reviewing applicant information (e.g., in the context of an employment application) is increasingly becoming a virtual process. During this process, an application containing applicant information is typically submitted to an application management system. Through the application management system, applications may be filtered and navigated through allowing a user of the application management system to identify a subset of applications (or applicants) for subsequent review. However, this system is not without its drawbacks. In many cases, applications (or applicants) are eliminated from contention without ever meeting an interviewer or having an interview. Therefore, information that may be pertinent to employment, but does not necessary fit into an automated form or is not easily expressed through an automated form, is not available to a user of the application management system.

This problem has increased exponentially recently as application management systems are routinely inundated with applications (or applicants) from different geographic areas and with more diverse backgrounds. In fact, virtual application management systems are often the only entry point for applications (or applicants) from remote or underserved geographic areas having less privileged socioeconomic circumstances.

Recently, the events related to the COVID-19 pandemic have pushed even more activities traditionally conducted in person to virtual environments. This has only exacerbated the problems discussed above as more applications (or applicants) must be filtered through application management systems, resulting in less time for individual review, and preventing a user of the application management system to hold follow-up interviews, receive additional information, or clarify any applicant information submitted to the application management system.

**SUMMARY**

Methods and systems are described herein for integrating institutional data systems and application management systems to address the problems cited above. For example, without time to conduct individual reviews of user information (e.g., contained in an application), hold follow-up interviews to flesh out additional issues, or otherwise put context around user information and native performance data from an institution (e.g., raw grades, degree classifications, A-Level assessments, etc.), application management systems will fail to present an equitable and unbiased review of the user.

For example, grade inflation continues to plague many educational institutions. However, without an ability to put native performance data into context (e.g., to account for the grade), a user of the application management system has no mechanism for contextualizing the native performance data from an institution. Likewise, as application management systems continue to receive submissions from more diverse geographic and socioeconomic areas, a user of the application management system has no mechanism for contextualizing information about these diverse geographic and socioeconomic areas or the challenges overcome by applicants from these areas (e.g., generational poverty, violence, etc.). Traditional outlets for reviewing the native performance data (e.g., institutional assessments, accreditations, etc.) may be unknown or unavailable in these areas. Moreover, while conventional application management systems may allow applicants to disclose extenuating circumstances, such disclosure are often overlooked or ignored as a result of filtering algorithms based on native performance data. Furthermore, the veracity of information, whether native performance data or socioeconomic issues, submitted to an application management system may not be easily authenticated.

To address these issues, the methods and systems provide an application management system that is integrated with native performance data from education institutions. For example, by integrating application management systems and institutional data systems, the integrated application management system provides a single interface for displaying native performance data and user information for a user in response to a single query. As the native performance data is received directly from the institutional data systems, the veracity of the native performance data is confirmed. To achieve this, the integrating application management system may employ a plurality of extraction and retrieval methods such as web scraping and government requests routines that automatically aggregate data from different institutions. Furthermore, the system may store data on the institutions themselves in order to determine the appropriate method for extracting and retrieving that data.

Additionally, the system may generate and present a user performance index in the interface displaying the native performance data and the user information for the user. For example, the user performance index may provide a indication of the quality of the native performance data for the user as compared to other users from the same institution. The display of this information in a single interface allows for the convenient review of the native performance data, the user performance index, and the user information for a user for comparisons with other users and for further filtering of applications as well as with a qualitative assessment for native performance data. Moreover, the display of this information in the single interface allows a user of the integrated application management system to quickly and easily parse applications with an assurance of the authenticity of the underlying data and with a contextual understanding of the native performance data based on the user performance index.

In one aspect, systems and methods are described for integrating institutional ranking systems and application management systems. For example, the system may store a first data structure for a first institutional data system, wherein the first data structure includes native performance data on a first plurality of users and a first ranking for each of the users in the first plurality of users based on respective native performance data for each of the first plurality of users. The system may store a second data structure for a non-integrated application management system, wherein the second data structure defines a first user information for a first user and a second user information for a second user. The system may receive a first system query requesting integration of first native performance data for the first user with the first user information. The system may determine whether the first user is included in the first plurality of users based on comparing a first user identifier for the first user to user identifiers for the first plurality of users. The system may, in response to determining that the first user is included in the first plurality of users based on comparing the first user identifier to the user identifiers for the first plurality of users, retrieve the first native performance data from the first data structure and the first ranking for each of the users in the first plurality of users. The system may determine a first user performance index for the first user based on a first rank of the first user in the first ranking, wherein the first user performance index is determined by normalizing the first rank based on an average rank for the first ranking. The system may generate for display, on a local display device, in a human-readable format a first user interface for an integrated application management system comprising the first native performance data, the first user performance index, and the first user information in response to the first system query.

Various other aspects, features, and advantages of the invention will be apparent through the detailed description of the invention and the drawings attached hereto. It is also to be understood that both the foregoing general description and the following detailed description are examples and not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification "a portion," refers to a part of, or the entirety of (i.e., the entire portion), a given item (e.g., data) unless the context clearly dictates otherwise.

## BRIEF DESCRIPTION OF THE DRAWINGS

FIG. 1 shows an illustrative user interface for an integrated application management system, in accordance with one or more embodiments.

FIG. 2 shows another illustrative user interface for an integrated application management system, in accordance with one or more embodiments.

FIG. 3 shows another illustrative user interface for an integrated application management system, in accordance with one or more embodiments.

FIG. 4 shows an illustrative system for integrating institutional control systems and application management systems, in accordance with one or more embodiments.

FIG. 5 shows flowchart of the steps involved in generating for display a first user interface for an integrated application management system comprising the first native performance data, the first user performance index, and the first user information, in accordance with one or more embodiments.

FIG. 6 shows a flowchart of the steps involved in generating a retrieval request for populating institutional data, in accordance with one or more embodiments.

FIG. 7 shows a flowchart of the steps involved in generating a user performance index, in accordance with one or more embodiments.

## DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art, that the embodiments of the invention may be practiced without these specific details or with an equivalent arrangement. In other cases, well-known data structures and devices are shown in block diagram form in order to avoid unnecessarily obscuring the embodiments of the invention. It should also be noted that the methods and systems disclosed herein are also suitable for applications unrelated to source code programming.

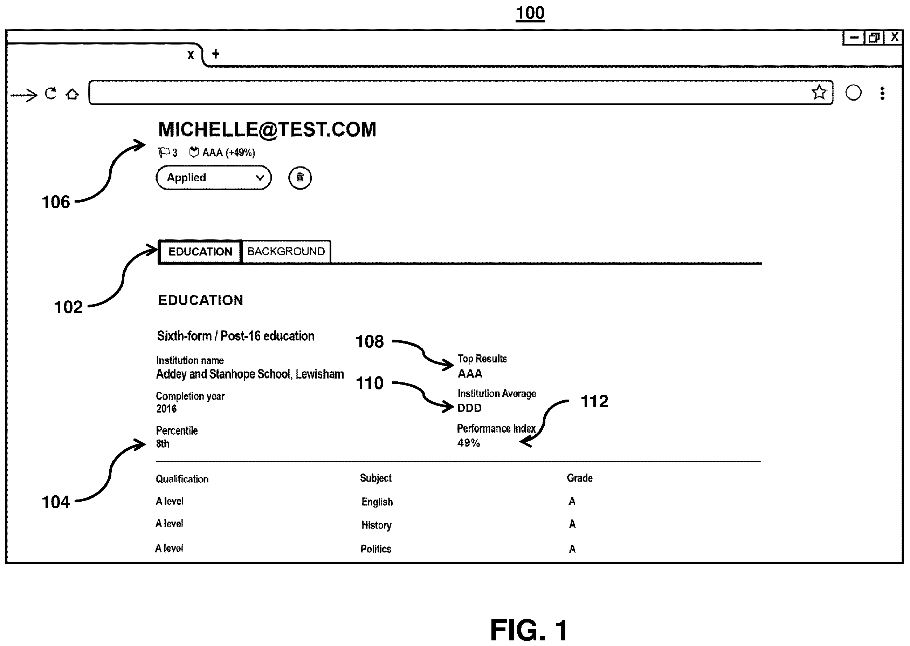

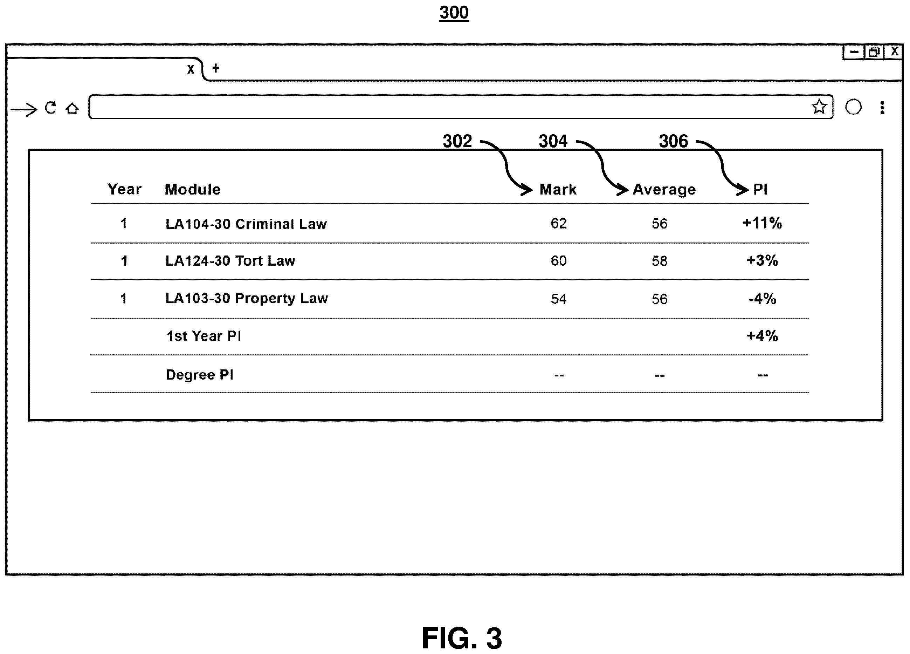

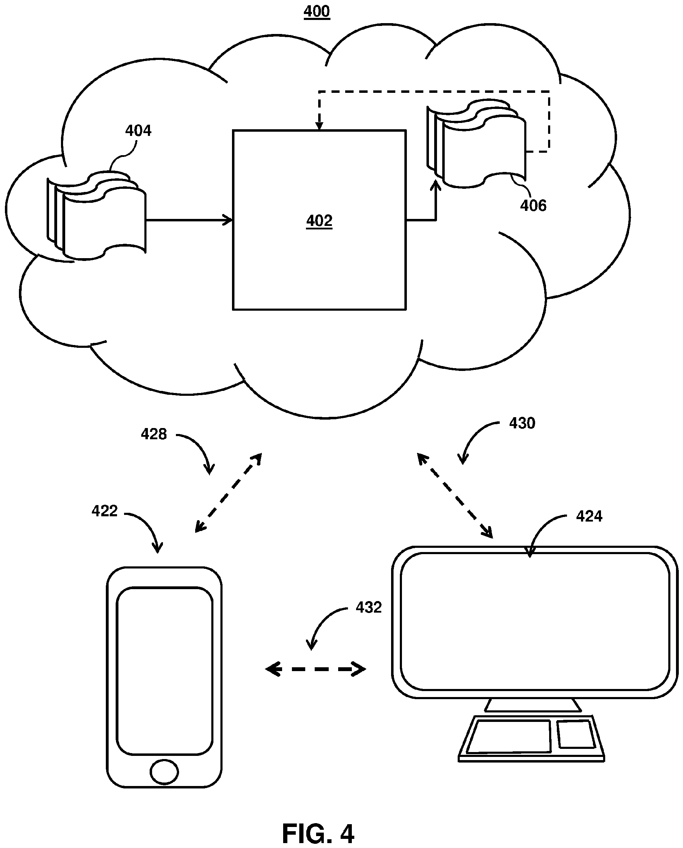

FIG. 1 shows an illustrative user interface for an integrated application management system, in accordance with one or more embodiments. For example, the system and methods described herein may generate for display, on a local display device (e.g., user device 422 and 424 (FIG. 4) described below), a user interface for an integrated application management system. An integrated application management system may include an application management system that integrates other systems (e.g., an institutional control system) and/or native data for those other systems. Through user interface 100, the integrated application management system, may receive a user request to access an integrated application management system (e.g., as shown via a selection of tab 102) and/or perform one or more operations such as generating additional information as shown in user interface 300 (FIG. 3), filter applications (or applicants) based on institutional data, etc.

User interface 100 may generate for display data related to an institutional control system. For example, the system may store native data corresponding to fields of institutional control systems (or other non-integrated systems) and a user performance index (e.g., index 112). For example, index 112 may describe a relationship of the native data to other native data for an institution. For example, the user performance index may comprise a measure of outperformance of a user compared to their peers (e.g., at an institution) at a given time or level of education.

Native data may comprise native data or native data-formats comprise data that originates from and/or relates to the institutional control system, the non-integrated application management systems, and/or their respective plugins. In some embodiments, native data may include data resulting from native code, which is code written specifically for the institutional ranking system, the non-integrated application management systems, a respective plugin designed therefor. The native data may also comprise data generate by the institutional control system (e.g., as it relates to the performance of a user at the institution).

Index 112 may be presented in any format and/or representation of data that can be naturally read by humans. In some embodiments, the index may appear as a graphical representation of data and/or may appear simultaneously with other data. For example, user interface 100 may comprising native performance data 104, native institution data 108 and 110, the first user performance index, and user information 106 in response to the first system query.

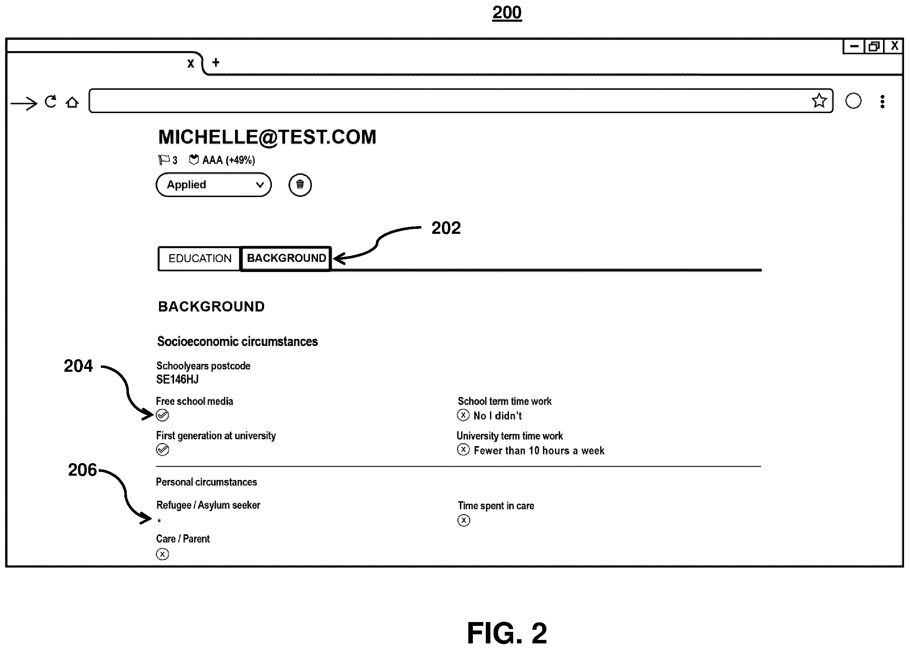

FIG. 2 shows another illustrative user interface for an integrated application management system, in accordance with one or more embodiments. For example, the system and methods described herein may generate for display, on a local display device (e.g., user device 422 and 424 (FIG. 4) described below), a user interface for an integrated application management system. For example, FIG. 2 displays user interface 200. User interface 200 may represent an exemplary user interface for an integrated application management system that display socioeconomic or other data in response to a selection of tab 202. The data generated in user interface 200 may be native to a non-integrated application management system and may be based on data retrieved from one or more third party sources. The data shown in user interface 200 may include socioeconomic data for an institution (e.g., data 204) or socioeconomic data that is specific to a user (e.g., data 206).

FIG. 3 shows another illustrative user interface for an integrated application management system, in accordance with one or more embodiments. For example, the system and methods described herein may generate for display, on a local display device (e.g., user device 422 and 424 (FIG. 4) described below), a user interface for an integrated application management system. User interface 300 may comprise a user interface for an integrated application management system. Through user interface 300, the integrated application management system, may receive a user request to access native data (e.g., as described in user interface 100 (FIG. 1) above) and/or perform one or more operations. In user interface 300, native user performance data 302 is shown together with native institution data 304, and a user performance index 306. In some embodiments, the system may further generate a quantitative or qualitative indication of the native performance data based on the user performance index. For example, the system may highlight high or low scores using graphical elements (e.g., color, text holding, etc.). The system may also modify the user performance index and/or the indication based on the seriocomic data (e.g., as shown in user interface 200 (FIG. 2)).

FIG. 4 shows an illustrative system for integrating institutional control systems and application management systems, in accordance with one or more embodiments. As shown in FIG. 4, system 400 may include user device 422, user device 424, and/or other components. Each user device may include any type of mobile terminal, fixed terminal, or other device. Each of these devices may receive content and data via input/output (hereinafter "I/O") paths and may also include processors and/or control circuitry to send and receive commands, requests, and other suitable data using the I/O paths. The control circuitry may be comprised of any suitable processing circuitry. Each of these devices may also include a user input interface and/or display for use in receiving and displaying data (e.g., user interface 100 (FIG. 1)). By way of example, user device 422 and user device 424 may include a desktop computer, a server, or other client device. Users may, for instance, utilize one or more of the user devices to interact with one another, one or more servers, or other components of system 400. It should be noted that, while one or more operations are described herein as being performed by particular components of system 400, those operations may, in some embodiments, be performed by other components of system 400. As an example, while one or more operations are described herein as being performed by components of user device 422, those operations may, in some embodiments, be performed by components of user device 424. System 400 also includes server 402, which may be implemented on user device 422 and user device 424, or accessible by communication paths 428 and 430, respectively. Server 402 may also include additional components such as data structure 404 (e.g., storing data for an institutional control system) and data structure 406 (e.g., storing data for a non-integrated application management system). It should be noted that, although some embodiments are described herein with respect to machine learning models, other prediction models (e.g., statistical models or other analytics models) may be used in lieu of, or in addition to, machine learning models in other embodiments (e.g., a statistical model replacing a machine learning model and a non-statistical model replacing a non-machine learning model in one or more embodiments).

Each of these devices may also include memory in the form of electronic storage. The electronic storage may include non-transitory storage media that electronically stores information. The electronic storage of media may include (i) system storage that is provided integrally (e.g., substantially non-removable) with servers or client devices and/or (ii) removable storage that is removably connectable to the servers or client devices via, for example, a port (e.g., a USB port, a firewire port, etc.) or a drive (e.g., a disk drive, etc.). The electronic storages may include optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include virtual storage resources (e.g., cloud storage, a virtual private network, and/or other virtual storage resources). The electronic storage may store software algorithms, information determined by the processors, information obtained from servers, information obtained from client devices, or other information that enables the functionality as described herein. For example, one or more of the components of system 400 may include cloud-based components (e.g., cloud-based memory, cloud-based control circuitry, cloud-based I/O circuitry, etc.).

FIG. 4 also includes communication paths 428, 430, and 432. Communication paths 428, 430, and 432 may include the Internet, a mobile phone network, a mobile voice or data network (e.g., a 4G or LTE network), a cable network, a public switched telephone network, or other types of communications network or combinations of communications networks. Communication paths 428, 430, and 432 may include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

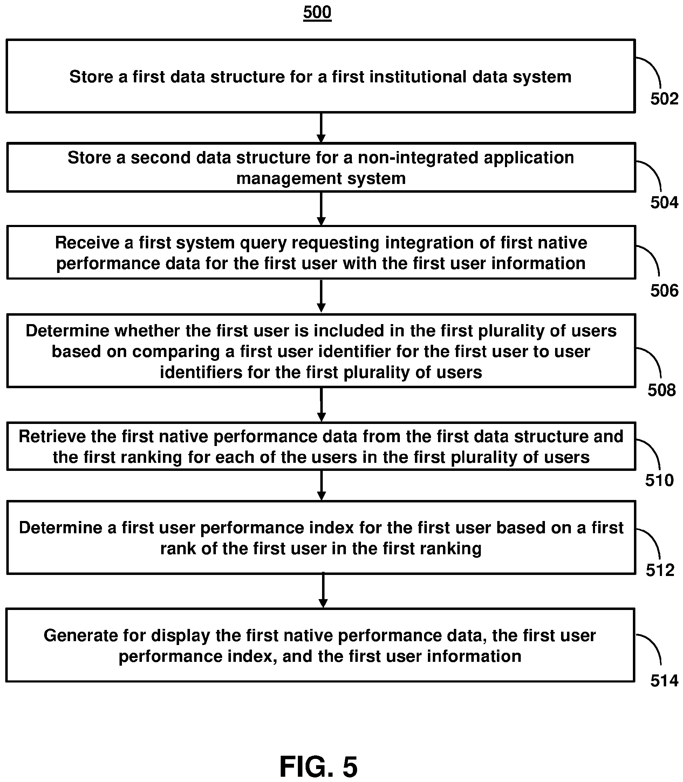

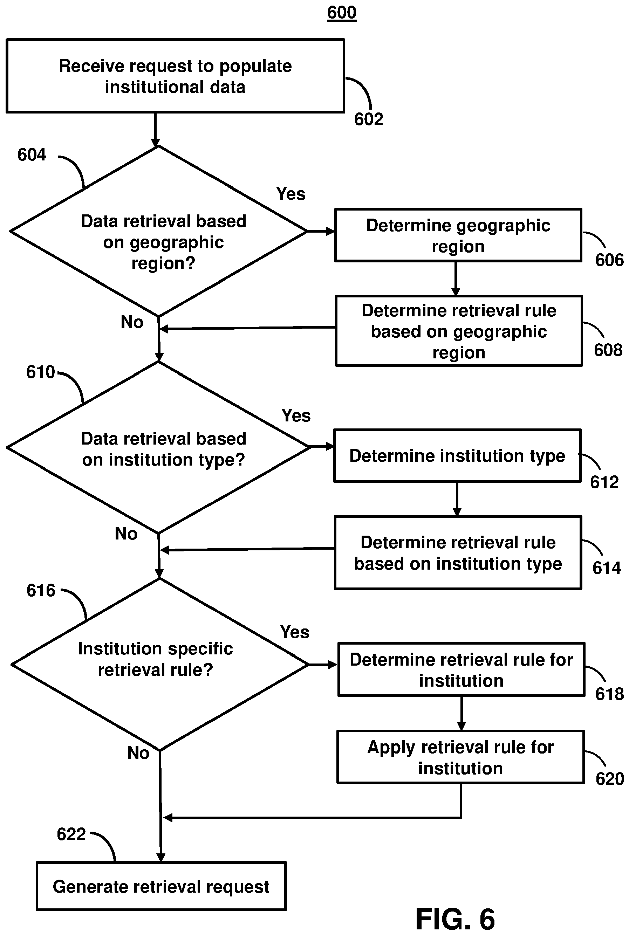

FIG. 5 shows flowchart of the steps involved in generating for display a first user interface for an integrated application management system comprising the first native performance data, the first user performance index, and the first user information, in accordance with one or more embodiments. For example, process 500 may represent the steps taken by one or more devices as shown in FIG. 4 when integrating institutional ranking systems and application management systems. In some embodiments, process 500 may be combined with one or more steps of processes described in FIGS. 6-7.

At step 502, process 500 stores (e.g., using control circuitry of one or more components of system 400 (FIG. 4)) a first data structure for a first institutional data system. For example, the system may store a first data structure for a first institutional data system, wherein the first data structure includes native performance data on a first plurality of users and a first ranking for each of the users in the first plurality of users based on respective native performance data for each of the first plurality of users.

For example, the native performance data (e.g., student grades, assessments, etc.) on the first plurality of users may comprise performance data at an educational institution corresponding to the first institutional data system. Alternatively or additionally, the native performance data on the first plurality of users may comprise data in a format native to the educational institution. Alternatively or additionally, the first data structure may further include native performance data on a second plurality of users and a second ranking for each of the users in the second plurality of users based on respective native performance data for each of the second plurality of users. For example, the first data structure may include native user performance data from a different category of users at the institution (e.g., a different grade level) or from another institution.

At step 504, process 500 stores (e.g., using control circuitry of one or more components of system 400 (FIG. 4)) a second data structure for a non-integrated application management system. For example, the system may store a second data structure for a non-integrated application management system, wherein the second data structure defines a first user information for a first user and a second user information for a second user.

For example, the first user information for the first user and the second user information for the second user (e.g., socioeconomic, employment history, etc.). Alternatively or additionally, the first user information for the first user and the second user information for the second user may comprise data in a format native to the non-integrated application management system.

At step 506, process 500 receives (e.g., using control circuitry of one or more components of system 400 (FIG. 4)) a first system query requesting integration of first native performance data for the first user with the first user information. For example, the system may receive a first system query requesting integration of first native performance data for the first user with the first user information.

At step 508, process 500 determines (e.g., using control circuitry of one or more components of system 400 (FIG. 4)) whether the first user is included in the first plurality of users based on comparing a first user identifier for the first user to user identifiers for the first plurality of users. For example, the system may determine whether the first user is included in the first plurality of users based on comparing a first user identifier for the first user to user identifiers for the first plurality of users.

At step 510, process 500 retrieves (e.g., using control circuitry of one or more components of system 400 (FIG. 4)) the first native performance data from the first data structure and the first ranking for each of the users in the first plurality of users. For example, the system may retrieve the first native performance data from the first data structure and the first ranking for each of the users in the first plurality of users in response to determining that the first user is included in the first plurality of users based on comparing the first user identifier to the user identifiers for the first plurality of users.

At step 512, process 500 determines (e.g., using control circuitry of one or more components of system 400 (FIG. 4)) a first user performance index for the first user based on a first rank of the first user in the first ranking. For example, the system may determine a first user performance index for the first user based on a first rank of the first user in the first ranking, wherein the first user performance index is determined by normalizing the first rank based on an average rank for the first ranking. The system may use or more methods and/or algorithms for determining a user performance index. In some embodiments, the system may determine the user performance index based on the algorithm:

$$\text{User Performance Index} = [\,[\text{User Score} / \text{Institution Score}] - 1\,] * 100$$

For example, to determine the user performance index the system may determine a first user score based on the first rank. The system may then determine a first institution score for the first institution. The system may then determine a quotient by dividing the first user score by the first institution score. The system may then determine a difference by subtracting one from the quotient. The system may then generate the human-readable format for the first user performance index by determining a product of one-hundred and the difference.

In some embodiments, the system may allow a user to update and/or edit the index. For example, the system may receive a user edit to the index (and/or the methodology for and then store the edited index). The system may then generate for display the edited index subsequently. For example, the system may allow users have a given authorization to edit index subject to that authorization. In such cases, the index may have read/write privileges. Upon generating the index for display, the system may verify that a current user has one or more read/write privileges. Upon verifying the level of privileges, the system may grant the user access to edit the index.

At step 514, process 500 generates for display (e.g., using control circuitry of one or more components of system 400 (FIG. 4)) the first native performance data, the first user performance index, and the first user information. For example, the system may generate for display, on a local display device, in a human-readable format a first user interface for an integrated application management system comprising the first native performance data, the first user performance index, and the first user information in response to the first system query.

For example, the index may be presented in any format and/or representation of data that can be naturally read by humans (e.g., via a user interface such as user interface 100 (FIG. 1)). In some embodiments, the index may appear as a graphical representation of data. For example, the index may comprise an index of the integrated data structure (e.g., index 112 (FIG. 1)). For example, through the user performance index, the first user interface for the integrated application management system may comprise a qualitative indication of a quantitative socioeconomic metric. Additionally or alternatively, the first user interface for the integrated application management system may further comprise a qualitative indication of the first native performance data based on the first user performance index (e.g., a color coding or other graphical element).

In some embodiments, the system may determine user performance indices for a plurality of users (e.g., users applying for employment through the non-integrated application management system). For example, the system may receive a second system query requesting integration of second native performance data for the second user with the second user information. the system may determine whether the second user is included in the first plurality of users or the second plurality of users based on comparing a second user identifier for the second user to the user identifies for the first plurality of users and the second plurality of users. The system may retrieve the second native performance data from the second data structure and the second ranking for each of the users in the second plurality of users in response to determining that the second user is included in the second plurality of users based on comparing the second user identifier to the user identifiers for the first plurality of users and the second plurality of users. The system may determine a second user performance index for the second user based on a second rank of the second user in the second ranking, wherein the second user performance index is determined by normalizing the second rank based on an average rank for the second ranking. The system may generate for display, on a local display device, in a human-readable format, a second user interface for the integrated application management system comprising the second native performance data, the second user performance index, and second user information in response to the second system query.

In some embodiments, the system may further retrieve data from other data structures. For example, the system may store a third data structure for a second institutional data system, wherein the third data structure includes native performance data on a third plurality of users and a third ranking for each of the users in the third plurality of users based on respective native performance data for each of the third plurality of users. The system may determine whether the first user is included in the third plurality of users in response to determining that the first user is not included in the first plurality of users or the second plurality of users based on comparing the first user identifier to the user identifiers for the first plurality of users and the second plurality of users.

It is contemplated that the steps or descriptions of FIG. 5 may be used with any other embodiment of this disclosure. In addition, the steps and descriptions described in relation to FIG. 5 may be done in alternative orders or in parallel to further the purposes of this disclosure. For example, each of these steps may be performed in any order or in parallel or substantially simultaneously to reduce lag or increase the speed of the system or method. Furthermore, it should be noted that any of the devices or equipment discussed in relation to FIGS. 1-4 could be used to perform one of more of the steps in FIG. 5.

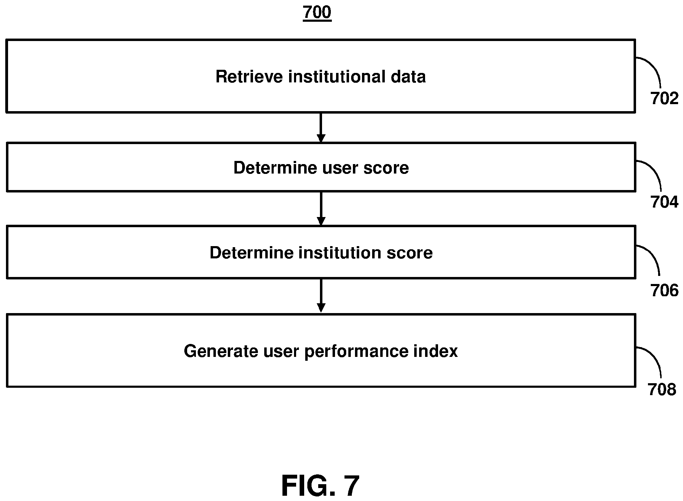

FIG. 6 shows a flowchart of the steps involved in generating a retrieval request for populating institutional data, in accordance with one or more embodiments. For example, process 600 may represent the steps taken by one or more devices as shown in FIGS. 1-4. For example, process 600 may represent the steps taken by one or more devices as shown in FIG. 4 when integrating one or more institutional controls systems and application management systems. In some embodiments, process 600 may be combined with one or more steps of processes described in FIGS. 5 and 7. It should also be noted that in some embodiments, one or more steps od process 600 may be combined. For example, in some embodiments, the institution type may indicate a geographic region of the first institution or a public or private affiliation of the first institution type (e.g., combining steps 604 and 610 below). For example, the system may store comprising store a data structure, and wherein the data structure indicates a respective institution type for a plurality of institutions and a respective query characteristic for each respective institution type. The system may use this information to generate a retrieval request as described in step 622.

At step 602, process 600 receives (e.g., using control circuitry of one or more components of system 400 (FIG. 4)) request to populate institutional data. For example, in response to a user query (e.g., via user interface 100 (FIG. 1)) to access an institutional data structure for an institutional data systems, the system may determine the one or more data structures (or one or more institutional data systems related to the data structures), the system may input the user query into a database listing available data structures (and/or institutional data systems related to the data structures). The system may filter the available data structures to determine one or more data structures that comprised by the institutional data structure.

At step 604, process 600 determines (e.g., using control circuitry of one or more components of system 400 (FIG. 4)) whether or not the data retrieval is based on geographic region. For example, the system may need to access institutional control systems in one or more geographic regions. The techniques for accessing and retrieving data from those systems may differ. For example, APIs and native plugins may be limited to detecting requests (or responding to requests) in a specific geographic region (e.g., servers in a given region may use a particular operating system, APIs, etc.). If process 600 determines that the data retrieval is based on a geographic region, process 600 proceeds to step 606. If process 600 determines that the data retrieval is based on a geographic region (e.g., all institutions are located within a single geographic region), process 600 proceeds to step 610.

At step 606, process 600 determines (e.g., using control circuitry of one or more components of system 400 (FIG. 4)) a geographic region of an institution. For example, the system may retrieve metadata related to the institution that includes an identifier (e.g., a country code) that uniquely identifies a geographic region for the institution.

At step 608, process 600 determines (e.g., using control circuitry of one or more components of system 400 (FIG. 4)) a retrieval rule based on the geographic region. For example, the system may input the identifier retrieved in step 606 into a database indicting retrieval rules for a given geographic region. The system may receive an output from the database indicating one or more retrieval rules. For example, the retrieved rule may indicate a specific operating system, plugin, data format, and/or APIs for use in requesting or receiving institutional data.

At step 610, process 600 determines (e.g., using control circuitry of one or more components of system 400 (FIG. 4)) whether or not the data retrieval is based on an institution type. For example, the system may need to access institutional control systems of one or more institution types. The techniques for accessing and retrieving data from those systems may differ based on that type. For example, public institutions may publicly disclose native performance data on one or more users. The access this information the system may need to initial a web scraping routine and/or issue a governmental request to a public body (e.g., governing the public institution). In contrast, a private institution may not make user performance information publicly available. In such case, the system may issue requests to third-party data aggregation services, submit formal requests to the body governing the private institution, and or use data analytics to estimate native user performance data. In some embodiments, the type of institution may include public or private, but may further delineate the availability of user performance data. If process 600 determines that the data retrieval is based on the institution type, process 600 proceeds to step 612. If process 600 determines that the data retrieval is not based on an institution type (e.g., all institutions have the same type and/or the retrieval method is the same for all institutions types), process 600 proceeds to step 616.

At step 612, process 600 determines (e.g., using control circuitry of one or more components of system 400 (FIG. 4)) an institution type. For example, the system may retrieve metadata related to the institution that includes an identifier (e.g., a type code) that identifies a type of the institution. Alternatively, the system may input an institution name into a database listing one or more institutions corresponding to a given type and receive an output from the database indicating the institution type. For example, in some embodiments, the system may determine a first institution type of a first institution, wherein the first institution corresponds to the first institutional data system. The system may then determine a first query characteristic for populating the first data structure based on the first institution type. The system may then generate a web scraping routine or a governmental request routine based on the first query characteristic. For example, the first query characteristic may indicate whether the native performance data is a publicly availability or available through a governmental source (or a data type for populating a data structure as described below in step 616).

At step 614, process 600 determines (e.g., using control circuitry of one or more components of system 400 (FIG. 4)) a retrieval rule based on the institution type. For example, the system may input the identifier retrieved in step 612 into a database indicting retrieval rules for a given type of institution. The system may receive an output from the database indicating one or more retrieval rules. For example, the retrieved rule may indicate that a particular routine (e.g., web scraping, governmental requests, third-party queries) for requesting or receiving institutional data. Additionally or alternatively, the rule may indicate one or more data privacy regulations and/or concerns that must be complied with and/or a mechanism (e.g., a specific request type) for complying with the regulation.

At step 616, process 600 determines (e.g., using control circuitry of one or more components of system 400 (FIG. 4)) whether or not the data retrieval is rule specific to the institution. For example, the system may need to access institutional control systems using a specific mechanism and/or in a specific format. For example, APIs and native plugins for receiving requests (or responding to requests) may be limited by the institution. Likewise, the native performance data may be in a format that is specific to the institution (e.g., a unique grading scale, a change to the year-over-year grading methodology, etc.). If process 600 determines that the data retrieval is based on a geographic region, process 600 proceeds to step 618. If process 600 determines that the data retrieval is based on a rule specific to the institution (e.g., all institutions are located within a single geographic region), process 600 proceeds to step 622.

For example, in some embodiments, the system may determine a second institution type of a second institution, wherein the second institution corresponds to the second institutional data system. The system may then determine a second query characteristic for populating the second data structure based on the second institution type and select a data type for populating the second data structure based on the second query characteristic. For example, a query characteristic may indicate an educational evaluation system used by the second institution, an educational evaluation metric used by the second institution, or a date range corresponding to a use of the educational evaluation system or the educational evaluation metric by the second institution.

At step 618, process 600 determines (e.g., using control circuitry of one or more components of system 400 (FIG. 4)) a retrieval rule for institution. For example, the system may retrieve metadata related to the institution that includes an identifier (e.g., an institution code) that uniquely identifies the institution.

At step 620, process 600 applies (e.g., using control circuitry of one or more components of system 400 (FIG. 4)) a retrieval rule based on the institution. For example, the system may input the rule retrieved in step 618 into a code set indicting retrieval procedures for the institution. The system may then execute the modified retrieval rule. For example, the retrieved rule may indicate a data format, APIs, etc. used to request/retrieve native performance data from the given institution.

Additionally or alternatively, the rule may indicate a year or modification to a grading, ranking score, or other criteria that may affect native performance data. For example, the system may track changes to the grading system of an institution and update its systems for these changes. For example, the system may monitor for institution type updates for the plurality of institutions and query characteristic updates for each respective institution type.

At step 622, process 600 generates (e.g., using control circuitry of one or more components of system 400 (FIG. 4)). For example, the system may generate a retrieval request that is specifically formatted and/or include instructions in response to one or more of the rules determined by process 600.

It is contemplated that the steps or descriptions of FIG. 6 may be used with any other embodiment of this disclosure. In addition, the steps and descriptions described in relation to FIG. 6 may be done in alternative orders or in parallel to further the purposes of this disclosure. For example, each of these steps may be performed in any order or in parallel or substantially simultaneously to reduce lag or increase the speed of the system or method. Furthermore, it should be noted that any of the devices or equipment discussed in relation to FIGS. 1-4 could be used to perform one of more of the steps in FIG. 6.

FIG. 7 shows a flowchart of the steps involved in generating a use performance index, in accordance with one or more embodiments. For example, the user performance index may comprise a measure of outperformance of a user compared to their peers (e.g., at an institution) at a given time or level of education. For example, the user performance index may comprise a percentage change calculation based on a candidate's performance and their school's performance in the year that the candidate completed their Key Stage 5 studies.

For example, in some embodiments, the user performance index may be based on Key Stage 5, which may be used to describe the two years of education for students aged 16-18, or at sixth form, in England, Wales and Northern Ireland, aligning with previous Key Stages as labelled for the national curriculum of the United Kingdom. Key Stage 5 may also correspond to, and the system may select Key Stage 5 because, the stage of education where students go through more intense and challenging courses in very specific subjects like mathematics and physics. This stage is the last stage of secondary education for members of sixth form as well, as when A-Levels are achieved the students will be able to apply for university. Thus, Key Stage 5 corresponds to a time period of standardized testing, on key subject matter, that is broadly applied to a large section of potential applications prior to employment.

Process 700 may represent the steps taken by one or more devices as shown in FIGS. 1-4. For example, process 700 may represent the steps taken by one or more devices as shown in FIG. 4 when integrating institutional ranking systems and application management systems. In some embodiments, process 700 may be combined with one or more steps of processes described in FIGS. 5-6.

At step 702, process 700 retrieves (e.g., using control circuitry of one or more components of system 400 (FIG. 4)) institutional data. For example, the system may retrieve institutional data based on a request as generated based on process 600. As described in process 600 above, the query characteristics (e.g., characteristics about the retrieval request) may indicate a geographic region, an institution type, whether the institution is a public or private affiliation of the first institution type, whether or not the retrieval request is generated by a web scraping routine or a governmental request routine, a format native to the educational institution, and/or whether the native performance data is a publicly availability or available through a governmental source, and/or an educational evaluation system used by the second institution, an educational evaluation metric used by the second institution, or a date range corresponding to a use of the educational evaluation system or the educational evaluation metric by the second institution. For example, the system may access a data structure indicating respective query characteristics for respective institutions and/or institution types.

At step 704, process 700 determines (e.g., using control circuitry of one or more components of system 400 (FIG. 4)) a user score. At step 706, process 700 determines (e.g., using control circuitry of one or more components of system 400 (FIG. 4)) an institution score. The user score and institution score may be determined based on a different methodology depending on a geographic region, institution, and/or institution type.

For example, in England, the institution score and the user score may be calculated based on QCA points given by the Qualifications and Curriculum Authority. The institution score may differ based on a time period. For example, pre-2016, the institution score is the "average point score per academic entry" for the institution, which is published by governmental sources. In 2016, the QCA points system changed, and therefore the system may use pre-2016 scores to ensure year-on-year consistency. For example, the system may apply an additional rule to the user and institution scores to convert post-2016 scores to the pre-2016 scale by multiplying by 3 and adding 120. The user score is based, by the system, on the average points per entry of the user performance in the top 3 Key Stage 5 subjects, or equivalent. The system may determine the points scores come from the pre-2016 QCA points (as described above).

The system may also modify the user performance index based on a number of qualifications. For example, where the system has native data for a single qualification (e.g., corresponding to a user taking) a single type of qualification, the system may use one set of criteria, whereas if the system has native data for multiple types of qualifications, the system may use another set of criteria. For example, if the system determines it only has native data for a single qualification an A score is only calculated, by the system, if the user inputs at least 3 A-Levels. The user score is then determined to be an average point score of the top 3 A-Levels. For International Baccalaureate (IB), the system may determine an average points per entry by dividing the pre-2016 QCA points for the IB grade by 4.75. For, Pre-Us, the system may only calculate a user score if the user inputs at least 3 Pre-Us. The system may then determine the user score as the average point score of the top 3 Pre-Us.

If the system has native data for multiple types of qualifications (e.g., A-Levels, IB, and Pre-Us, the system may retrieve the highest valid score and use it to determine the user score. For example, if the system has native performance data of 3 A-Levels and 2 Pre-Us, the user score would be determine based on the 3 A-Levels (e.g., as only 2 Pre-Us would not generate a valid user score). Alternatively, if the system has native performance data for both A-Levels and Pre-Us, then the system may calculate the user score as long as there are at least 3 qualifications in total. The system may then determine the user score based on the average points per entry of these qualifications.

Finally, if the system does not have an institution score or a user score, the system may not calculate a user performance index and instead use a default metric (e.g., based on any available native user performance data, socioeconomic data, or other user information).

In Wales, the system determines the institution score based on points per A-Level exam entry for each institution, which is obtained by a Freedom of Information request from the Welsh Government. The system determines the user score in the same way as for England, using the same scoring, but Pre-U exams are not considered.

In Northern Ireland, the system determines the institution score based on the Average Point Score per A-Level Qualification, which is obtained by a Freedom of Information request to the government. The system determines the user score in the same way as for England and Wales, using the same scoring, but only A-Levels are considered.

In Scotland, the qualifications sat for are not completely equivalent to those sat in England, Wales and Northern Ireland. For example, the institution score and the user score are taken from the Tariff Score published by Education Scotland and are calculated Standards/National 5s (SCQF level 5), Highers (SCQF level 6) and Advanced Higher (SCQF level 7) qualifications.

The institution score used by the system may also be dependent on whether the user has taken any Advanced Higher qualifications and whether the institution where the user completed their KS5 qualifications had at least 20% of students take an Advanced Higher Qualification. For example, by using this calculation, the system is able to better compare the user (and user score) to a comparable cohort in their institution. With respect to Tariff Scores, all Tariff Scores are published by Education Scotland. Based on this, the system may use one or more metrics to determine a user performance index. For example, if the system has no SCQF Level 7 Advanced Highers and the institution has less than 20% of students achieving Level 7 qualifications, the system determines that the institution score is the institution average Tariff Score. If the system has SCQF Level 7 Advanced Highers and the institution has less than 20% 1 or more SCQF Level 7 the institution score is the Average Tariff Score of Highest 20% of the institution. If the system has SCQF Level 7 Advanced Highers and the institution has a greater than 20% of users achieving 1 or more SCQF Level 7, then the system determines that the institution score is the average of the Average Tariff Score of the middle 60% of the institution and the Average Tariff Score of Highest 20% of the institution. Finally, if the system has no SCQF Level 7 Advanced Highers and the institution has greater than 20% of students achieving 1 or more SCQF Level 7, then the system determines an institution score that is the Average Tariff Score of Middle 60% of the institution.

The user score used by the system may also depend on a series of rules. For example, the system may determine the user score based on the individual Tariff scores of the user's Standards/National 5s, Highers and Advanced Highers. By doing so, the system's calculation is comparable to how the school average Tarff scores are calculated. For example, Tariff Scores are calculated by taking the best and the latest grade of each examination a user takes (e.g., the grade achieved at the highest qualification a user has taken in a subject). The system then determines a user score that is the sum of the individual Tariff scores for each Standard/National 5, Higher and Advanced Higher taken, excluding those that are taken at a higher level. For example, if History is taken at National 5, Higher and Advanced Higher level, only the Tariff Score for the Advanced Higher level is used for the total Tariff Score of the user.

At step 708, process 700 generates (e.g., using control circuitry of one or more components of system 400 (FIG. 4)) a user performance index. For example, the system may generate the user performance index based on the user score and the institution score as determine based on one or more query characteristics.

It is contemplated that the steps or descriptions of FIG. 7 may be used with any other embodiment of this disclosure. In addition, the steps and descriptions described in relation to FIG. 7 may be done in alternative orders or in parallel to further the purposes of this disclosure. For example, each of these steps may be performed in any order or in parallel or substantially simultaneously to reduce lag or increase the speed of the system or method. Furthermore, it should be noted that any of the devices or equipment discussed in relation to FIGS. 1-4 could be used to perform one of more of the steps in FIG. 7.

The above-described embodiments of the present disclosure are presented for purposes of illustration and not of limitation, and the present disclosure is limited only by the claims which follow. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:

1. A method for integrating institutional data systems and application management systems, comprising: storing a first data structure for a first institutional data system, wherein the first data structure includes native performance data on a first plurality of users and a first ranking for each of the users in the first plurality of users based on respective native performance data for each of the first plurality of users; storing a second data structure for a non-integrated application management system, wherein the second data structure defines a first user information for a first user and a second user information for a second user; receiving a first system query requesting integration of first native performance data for the first user with the first user information; determining whether the first user is included in the first plurality of users based on comparing a first user identifier for the first user to user identifiers for the first plurality of users; in response to determining that the first user is included in the first plurality of users based on comparing the first user identifier to the user identifiers for the first plurality of users, retrieving the first native performance data from the first data structure and the first ranking for each of the users in the first plurality of users; determining a first user performance index for the first user based on a first rank of the first user in the first ranking, wherein the first user performance index is determined by normalizing the first rank based on an average rank for the first ranking; and generating for display, on a local display device, in a human-readable format a first user interface for an integrated application management system comprising the first native performance data, the first user performance index, and the first user information in response to the first system query.

2. The method of embodiment 1, wherein the native performance data on the first plurality of users comprises performance data at an educational institution corresponding to the first institutional data system.

3. The method of embodiment 1 or 2, wherein the native performance data on the first plurality of users comprises data in a format native to the educational institution.

4. The method of any one of embodiments 1-3, wherein normalizing the first rank based on the average rank for the first ranking comprising: determining a first user score based on the first rank; determining a first institution score for the first institution; determining a quotient by dividing the first user score by the first institution score; determining a difference by subtracting one from the quotient; and generating the human-readable format for the first user performance index by determining a product of one-hundred and the difference.

5. The method of any one of embodiments 1-4, wherein the first data structure further includes native performance data on a second plurality of users and a second ranking for each of the users in the second plurality of users based on respective native performance data for each of the second plurality of users.

6. The method of any one of embodiments 1-5, further comprising: receiving a second system query requesting integration of second native performance data for the second user with the second user information; determining whether the second user is included in the first plurality of users or the second plurality of users based on comparing a second user identifier for the second user to the user identifies for the first plurality of users and the second plurality of users; in response to determining that the second user is included in the second plurality of users based on comparing the second user identifier to the user identifiers for the first plurality of users and the second plurality of users, retrieving the second native performance data from the second data structure and the second ranking for each of the users in the second plurality of users; determining a second user performance index for the second user based on a second rank of the second user in the second ranking, wherein the second user performance index is determined by normalizing the second rank based on an average rank for the second ranking; and generating for display, on a local display device, in a human-readable format, a second user interface for the integrated application management system comprising the second native performance data, the second user performance index, and the second user information in response to the second system query.

7. The method of any one of embodiments 1-6, further comprising storing a third data structure for a second institutional data system, wherein the third data structure includes native performance data on a third plurality of users and a third ranking for each of the users in the third plurality of users based on respective native performance data for each of the third plurality of users; and determining whether the first user is included in the third plurality of users in response to determining that the first user is not included in the first plurality of users or the second plurality of users based on comparing the first user identifier to the user identifiers for the first plurality of users and the second plurality of users.

8. The method of any one of embodiments 1-7, further comprising: determining a first institution type of a first institution, wherein the first institution corresponds to the first institutional data system; determining a first query characteristic for populating the first data structure based on the first institution type; and generating a web scraping routine or a governmental request routine based on the first query characteristic.

9. The method of any one of embodiments 1-8, wherein the first query characteristic indicates whether the native performance data is a publicly availability or available through a governmental source.

10. The method of any one of embodiments 1-9, wherein the first institution type indicates: a geographic region of the first institution; or a public or private affiliation of the first institution type.

11. The method of any one of embodiments 1-10, further comprising: determining a second institution type of a second institution, wherein the second institution corresponds to the second institutional data system; determining a second query characteristic for populating the second data structure based on the second institution type; and selecting a data type for populating the second data structure based on the second query characteristic.

12. The method of any one of embodiments 1-11, wherein the second query characteristic indicates an educational evaluation system used by the second institution, an educational evaluation metric used by the second institution, or a date range corresponding to a use of the educational evaluation system or the educational evaluation metric by the second institution.

13. The method of any one of embodiments 1-12, further comprising storing a fourth data structure, and wherein the fourth data structure indicates a respective institution type for a plurality of institutions and a respective query characteristic for each respective institution type.

14. The method of any one of embodiments 1-13, further comprising monitoring for institution type updates for the plurality of institutions and query characteristic updates for each respective institution type.

15. The method of any one of embodiments 1-14, wherein the first user interface for the integrated application management system further comprises a qualitative indication of a quantitative socioeconomic metric.

16. The method of any one of embodiments 1-15, wherein the first user interface for the integrated application management system further comprises a qualitative indication of the first native performance data based on the first user performance index.

17. A tangible, non-transitory, machine-readable medium storing instructions that, when executed by a data processing apparatus, cause the data processing apparatus to perform operations comprising those of any of embodiments 1-16.

18. A system comprising: one or more processors; and memory storing instructions that, when executed by the processors, cause the processors to effectuate operations comprising those of any of embodiments 1-16.

19. A system comprising means for performing any of embodiments 1-16.

20. A system comprising cloud-based circuitry for performing any of embodiments 1-16.

## Claims

1. A system for integrating institutional data systems and application management systems, comprising:

cloud-based memory of an integrated application management system configured to:

store a first data structure for a first institutional data system, wherein the first data structure includes:

native performance data on a first plurality of users and a first ranking for each of the users in the first plurality of users based on respective native performance data for each of the first plurality of users; and native performance data on a second plurality of users and a second ranking for each of the users in the second plurality of users based on respective native performance data for each of the second plurality of users; and

store a second data structure for an application management system, wherein the second data structure defines a first user information for a first user and a second user information for a second user; cloud-based control circuitry of the integrated application management system configured to:

receive a user query requesting to populate institutional data;
determine, based on metadata related to a first institution that uniquely identifies a geographic region of the first institution, the geographic region of the first institution, wherein the first institution corresponds to the first institutional data system;
determine a first retrieval rule based on the geographic region, wherein the first retrieval rule indicates a geographically compliant application programming interface (" API");
determine, based on metadata related to the first institution that identifies a type code for the first institution, a first institution type of the first institution;
determine a second retrieval rule based on the institution type, wherein the second retrieval rule comprises:

determining a first query characteristic for populating the first data structure based on the first institution type;
generating a web scraping routine or a governmental request routine based on the first query characteristic for populating the first data structure;

determine, based on metadata related to the first institution that identifies retrieval rules specific to the first institution, a rule specific to the first institution;
determine a third retrieval rule based on the rule specific to the first institution, wherein the third retrieval rule indicates an institutionally compliant API;

generate a retrieval request that is formatted based on the first retrieval rule, the second retrieval rule, and the third retrieval rule;

receive a first system query requesting integration of first native performance data for the first user with the first user information;

determine whether the first user is included in the first plurality of users or the second plurality of users based on comparing a first user identifier for the first user to user identifiers for the first plurality of users and the second plurality of users;

retrieve, in response to determining that the first user is included in the first plurality of users based on comparing the first user identifier to the user identifiers for the first plurality of users and the second plurality of users, the first native performance data from the first data structure and the first ranking for each of the users in the first plurality of users;

determine a first user performance index for the first user based on a first rank of the first user in the first ranking, wherein the first user performance index is determined by normalizing the first rank based on an average rank for the first ranking;

receive a second system query requesting integration of second native performance data for the second user with the second user information;

determine whether the second user is included in the first plurality of users or the second plurality of users based on comparing a second user identifier for the second user to the user identifiers for the first plurality of users and the second plurality of users;

retrieve, in response to determining that the second user is included in the second plurality of users based on comparing the second user identifier to the user identifiers for the first plurality of users and the second plurality of users, the second native performance data from the second data structure and the second ranking for each of the users in the second plurality of users;

determine a second user performance index for the second user based on a second rank of the second user in the second ranking, wherein the second user performance index is determined by normalizing the second rank based on an average rank for the second ranking; and

cloud-based I/O circuitry configured to generate for display, on a local display device, in a human-readable format:

a first user interface for the integrated application management system comprising the first native performance data, the first user performance index, and the first user information in response to the first system query; and

a second user interface for the integrated application management system comprising the second native performance data, the second user performance index, and the second user information in response to the second system query.

2. The system of claim 1, wherein:

the cloud-based memory is further configured to store a third data structure for a second institutional data system, wherein the third data structure includes native performance data on a third plurality of users and a third ranking for each of the users in the third plurality of users based on respective native performance data for each of the third plurality of users; and

the cloud-based control circuitry is further configured to determine whether the first user is included in the third plurality of users in response to determining that the first user is not included in the first plurality of users or the second plurality of users based on comparing the first user identifier to the user identifiers for the first plurality of users and the second plurality of users.

3. The system of claim 2, the cloud-based control circuitry is further configured to:

determine a second institution type of a second institution, wherein the second institution corresponds to the second institutional data system;

determine a second query characteristic for populating the second data structure based on the second institution type; and

select a data type for populating the second data structure based on the second query characteristic.

4. The system of claim 3, wherein the second query characteristic indicates an educational evaluation system used by the second institution, an educational evaluation metric used by the second institution, or a date range corresponding to a use of the educational evaluation system or the educational evaluation metric by the second institution.

**5.** The system of claim 4, wherein the cloud-based memory is further configured to store a fourth data structure, and wherein the fourth data structure indicates a respective institution type for a plurality of institutions and a respective query characteristic for each respective institution type.

**6.** The system of claim 5, wherein cloud-based control circuitry is further configured to monitor for institution type updates for the plurality of institutions and query characteristic updates for each respective institution type.

**7.** A method for integrating institutional data systems and application management systems, comprising:

receiving, at an integrated application management system, a user query requesting to populate institutional data;
determining, based on metadata related to a first institution that uniquely identifies a geographic region of the first institution, using the control circuity of the integrated application management system, the geographic region of the first institution, wherein the first institution corresponds to the first institutional data system;
determining, using the control circuity of the integrated application management system, a first retrieval rule based on the geographic region, wherein the first retrieval rule indicates a geographically compliant application programming interface ("API");
determining, based on metadata related to the first institution that identifies a type code for the first institution, using the control circuity of the integrated application management system, a first institution type of the first institution;
determining a second retrieval rule based on the institution type, wherein the second retrieval rule comprises:

determining, using the control circuity of the integrated application management system, a first query characteristic for populating a first data structure based on the first institution type;
generating, using the control circuity of the integrated application management system, a web scraping routine or a governmental request routine based on the first query characteristic for populating the first data structure;

determining, based on metadata related to the first institution that identifies retrieval rules specific to the first institution, using the control circuity of the integrated application management system, a rule specific to the first institution;
determining, using the control circuity of the integrated application management system, a third retrieval rule based on the rule specific to the first institution, wherein the third retrieval rule indicates an institutionally compliant API;
generating, using the control circuity of the integrated application management system, a retrieval request based on the first retrieval rule, the second retrieval rule, and the third retrieval rule;
storing, in computer memory of the integrated application management system, the first data structure for the first institutional data system, wherein the first data structure includes native performance data on a first plurality of users and a first ranking for each of the users in the first plurality of users based on respective native performance data for each of the first plurality of users;
storing, in the computer memory of the integrated application management system, a second data structure for a non-integrated application management system, wherein the second data structure defines a first user information for a first user and a second user information for a second user;
receiving, using the control circuity of the integrated application management system, a first system query requesting integration of first native performance data for the first user with the first user information;
determining, using the control circuity of the integrated application management system, whether the first user is included in the first plurality of users based on comparing a first user identifier for the first user to user identifiers for the first plurality of users;
in response to determining that the first user is included in the first plurality of users based on comparing the first user identifier to the user identifiers for the first plurality of users, retrieving, using the control circuity of the integrated application management system, the first native performance data from the first data structure and the first ranking for each of the users in the first plurality of users;
determining, using the control circuity of the integrated application management system, a first user performance index for the first user based on a first rank of the first user in the first ranking, wherein the first user performance index is determined by normalizing the first rank based on an average rank for the first ranking; and
generating for display, on a local display device of the integrated application management system, in a human-readable format a first user interface for an integrated application management system comprising the first native performance data, the first user performance index, and the first user information in response to the first system query.

8. The method of claim 6, wherein the native performance data on the first plurality of users comprises performance data at an educational institution corresponding to the first institutional data system.

9. The method of claim 8, wherein the native performance data on the first plurality of users comprises data in a format native to the educational institution.

10. The method of claim 9, wherein normalizing the first rank based on the average rank for the first ranking comprising:

   determining a first user score based on the first rank;
   determining a first institution score for the first institution;
   determining a quotient by dividing the first user score by the first institution score;
   determining a difference by subtracting one from the quotient; and
   generating the human-readable format for the first user performance index by determining a product of one-hundred and the difference.

11. The method of claim 10, wherein the first data structure further includes native performance data on a second plurality of users and a second ranking for each of the users in the second plurality of users based on respective native performance data for each of the second plurality of users.

12. The method of claim 11, further comprising:

   receiving a second system query requesting integration of second native performance data for the second user with the second user information;
   determining whether the second user is included in the first plurality of users or the second plurality of users based on comparing a second user identifier for the second user to the user identifies for the first plurality of users and the second plurality of users;
   in response to determining that the second user is included in the second plurality of users based on comparing the second user identifier to the user identifiers for the first plurality of users and the second plurality of users, retrieving the second native performance data from the second data structure and the second ranking for each of the users in the second plurality of users;
   determining a second user performance index for the second user based on a second rank of the second user in the second ranking, wherein the second user performance index is determined by normalizing the second rank based on an average rank for the second ranking; and
   generating for display, on a local display device, in a human-readable format, a second user interface for the integrated application management system comprising the second native performance data, the second user performance index, and second user information in response to the second system query.

13. The method of claim 12, further comprising:

   storing a third data structure for a second institutional data system, wherein the third data structure includes native performance data on a third plurality of users and a third ranking for each of the users in the third plurality of users based on respective native performance data for each of the third plurality of users; and
   determining whether the first user is included in the third plurality of users in response to determining that the first user is not included in the first plurality of users or the second plurality of users based on comparing the first user identifier to the user identifiers for the first plurality of users and the second plurality of users.

14. The method of claim 13, further comprising:

   determining a second institution type of a second institution, wherein the second institution corresponds to the second institutional data system;
   determining a second query characteristic for populating the second data structure based on the second institution type; and
   selecting a data type for populating the second data structure based on the second query characteristic.

15. The method of claim 14, wherein the second query characteristic indicates an educational evaluation system used by the second institution, an educational evaluation metric used by the second institution, or a date range corresponding to a use of the educational evaluation system or the educational evaluation metric by the second institution, and wherein the method further comprises:

storing a fourth data structure, and wherein the fourth data structure indicates a respective institution type for a plurality of institutions and a respective query characteristic for each respective institution type; and monitoring for institution type updates for the plurality of institutions and query characteristic updates for each respective institution type, wherein the first user interface for the integrated application management system further comprises a qualitative indication of a quantitative socioeconomic metric, and wherein the first user interface for the integrated application management system further comprises a qualitative indication of the first native performance data based on the first user performance index.

FIG. 1

EP 3 910 500 A1

MICHELLE@TEST.COM

⚑ 3  ♡ AAA (+49%)

( Applied ⌄ )  🗑

**202**

| EDUCATION | BACKGROUND |

## BACKGROUND

**Socioeconomic circumstances**

**204**

Schoolyears postcode
SE146HJ

Free school media
✅

First generation at university
✅

School term time work
ⓧ No I didn't

University term time work
ⓧ Fewer than 10 hours a week

**206**

Personal circumstances

Refugee / Asylum seeker
*

Care / Parent
ⓧ

Time spent in care
ⓧ

EP 3 910 500 A1

## FIG. 2

| Year | Module | Mark | Average | PI |
|------|--------|------|---------|-----|
| 1 | LA104-30 Criminal Law | 62 | 56 | +11% |
| 1 | LA124-30 Tort Law | 60 | 58 | +3% |
| 1 | LA103-30 Property Law | 54 | 56 | -4% |
| | 1st Year PI | | | +4% |
| | Degree PI | -- | -- | -- |

**FIG. 3**

EP 3 910 500 A1

**FIG. 4**

<u>500</u>

```
┌─────────────────────────────────────────────────────────┐
│                                                         │
│   Store a first data structure for a first institutional data system   │──╮
│                                                         │   502
└─────────────────────────────────────────────────────────┘
                            │
                            ▼
┌─────────────────────────────────────────────────────────┐
│   Store a second data structure for a non-integrated application   │──╮
│                  management system                       │   504
└─────────────────────────────────────────────────────────┘
                            │
                            ▼
┌─────────────────────────────────────────────────────────┐
│   Receive a first system query requesting integration of first native   │──╮
│   performance data for the first user with the first user information   │   506
└─────────────────────────────────────────────────────────┘
                            │
                            ▼
┌─────────────────────────────────────────────────────────┐
│  Determine whether the first user is included in the first plurality of users  │──╮
│   based on comparing a first user identifier for the first user to user   │   508
│          identifiers for the first plurality of users          │
└─────────────────────────────────────────────────────────┘
                            │
                            ▼
┌─────────────────────────────────────────────────────────┐
│  Retrieve the first native performance data from the first data structure and  │──╮
│   the first ranking for each of the users in the first plurality of users   │   510
└─────────────────────────────────────────────────────────┘
                            │
                            ▼
┌─────────────────────────────────────────────────────────┐
│  Determine a first user performance index for the first user based on a first  │──╮
│          rank of the first user in the first ranking          │   512
└─────────────────────────────────────────────────────────┘
                            │
                            ▼
┌─────────────────────────────────────────────────────────┐
│   Generate for display the first native performance data, the first user   │──╮
│       performance index, and the first user information       │   514
└─────────────────────────────────────────────────────────┘
```

**FIG. 5**

600

Receive request to populate
institutional data
602

604

Data retrieval based
on geographic
region?

Yes → Determine geographic
region
606

↓

Determine retrieval rule
based on geographic
region
608

No

610

Data retrieval based
on institution type?

Yes → Determine institution type
612

↓

Determine retrieval rule
based on institution type
614

No

616

Institution specific
retrieval rule?

Yes → Determine retrieval rule for
institution
618

↓

Apply retrieval rule for
institution
620

No

622

Generate retrieval request

FIG. 6

<u>700</u>

| Retrieve institutional data | 702 |

↓

| Determine user score | 704 |

↓

| Determine institution score | 706 |

↓

| Generate user performance index | 708 |

**FIG. 7**

Europäisches
Patentamt

European
Patent Office

Office européen
des brevets

# EUROPEAN SEARCH REPORT

**Application Number**

EP 21 17 3983

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mitchell Ryan: "Web Scraping with Python: Collecting Data from the Modern Web" In: "Web Scraping with Python: Collecting Data from the Modern Web", 10 June 2015 (2015-06-10), O'Reilly Media, XP055842320, ISBN: 978-1-4919-1027-6 pages 1-238, * page 1 * * page 40 * * page 53 * * page 71 * * page 77 * * page 81 * * page 116 * * page 205 * ----- | 1-15 | INV. G06F16/951 G06Q50/00 |

TECHNICAL FIELDS
SEARCHED (IPC)

G06F
G06Q

The present search report has been drawn up for all claims

| Place of search | Date of completion of the search | Examiner |
|---|---|---|
| The Hague | 17 September 2021 | Rameseder, Jonathan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)